# EUROPEAN PATENT APPLICATION

(11) **EP 1 431 642 A1**
(43) Date of publication of application: **23.06.2004**
(21) Application number: 03075827.0
(22) Date of filing: 21.03.2003
(51) Int. Cl.: F16L 7/00

(54) **Spacer for positioning an inner tube in an outer tube and assembly of such a spacer and an inner tube and/or outer tube**

(30) Priority: 18.12.2002 NL 1022192
(71) Applicant: Muelink & Grol Groep B.V., 9723 BP Groningen (NL)
(72) Inventor: Klok, Leffert, 9403 GJ Assen (NL); Snippe, Gerrit Roelof, 9334 TB Peest (NL)
(74) Representative: Jorritsma, Ruurd

(57) **Abstract**

The present invention relates to a spacer (50) for securing an inner tube (51) in an outer tube (52). The spacer comprises: an enclosing part for enclosing the inner tube all round as well as at least two radial projections (7-10,24,25) provided on the enclosing part for engaging on the inside of the outer tube. The radial projections, viewed in the axial direction, have a surface (30) converging towards the inner tube. This converging surface in particular tapers. The spacer can be produced from a single sheet section by means of punching and setting operations. The invention furthermore relates to an assembly of a spacer with an inner tube and/or outer tube.

## Description

The present invention relates to a spacer for positioning an inner tube in an outer tube, the spacer comprising an enclosing part for enclosing the inner tube all round, the enclosing part comprising:
- at least one inner segment for engaging on the outside of the inner tube;
- at least one outer segment for engaging on the inside of the outer tube, and
- at least two radial segments extending between the at least one inner segment and the at least one outer segment.

A spacer of this type is disclosed in EP-A 0 553 936. This document discloses a spacer in the form of a wire in a single plane. With reference to Figures 4 and 2 in this disclosure, three outer segments (7), six radial segments (6) and three inner segments can be distinguished in the spacer in the form of a wire. The inner segments are each formed by a curved part that joins two adjacent radial segments (6). For fixing this spacer in the inner tube and outer tube both inner tube and outer tube are provided, on the outside and on the inside, respectively, with a groove in which the inner segments and outer segments, respectively, of the wire engage. One of the outer segments is split so that the spacer in the form of a wire can be bent open or, in contrast, can be compressed. There are two possibilities for fitting. The first possibility is to bend open the spacer in the form of a wire for fixing this around the inner tube first and then to insert the assembly, thus formed, of inner tube and spacer in the form of a wire into the outer tube. The other method of fixing is first to compress the spacer in the form of a wire for fixing in the outer tube and then to insert the inner tube in the assembly of outer tube and spacer in the form of a wire fixed therein. With both methods of fixing accurate alignment of the inner tube with respect to the outer tube must take place since otherwise the spacer in the form of a wire that has already been fitted on the one tube could be pushed off this by the other tube, or at least could be pushed out of place.

If EP 553 936 is taken as the starting point, the aim of the present invention is to provide a spacer which simplifies the assembly of inner tube and outer tube and guarantees the mutual positioning in a more reliable manner.

According to the invention this aim is achieved by providing a spacer of the type mentioned in the preamble, which spacer is characterised in that the radial segments, viewed in the axial direction, comprise a surface that converges, in particular tapers, towards the axial centre line. The surface on the radial segments tapering towards the axial centre line, viewed in the axial direction, provides a seeking edge. If the spacer according to the invention is first fixed to the inner tube (or outer tube), the seeking edge will serve as a guide that centres the outer tube (or, respectively, the inner tube) with respect to the inner tube (or, respectively, outer tube) should prefect centring not be achieved.

According to an advantageous embodiment, the spacer according to the invention comprises at least three such radial segments and these radial segments are distributed, in particular uniformly distributed, around the periphery of the enclosing part. In this way a guide for centring distributed around the periphery is provided.

According to a further advantageous embodiment of the invention, the spacer is made of a sheet section, in particular a single sheet section, comprising a multiplicity of said inner segments and a multiplicity of said outer segments, the inner and outer segments merging into a said radial segment at the tangential ends thereof via a fold line. Such a spacer can easily be produced from a sheet section, in particular a strip-shaped sheet section, by folding, bending and punching operations. Here the inner segments and outer segments can easily consist of a strip of sheet material which runs tangentially and is adapted to the outer periphery of the inner tube or inner periphery of the outer tube. The surfaces that converge with respect to the axial centre line of the spacer can easily be obtained using a suitable blanking die. As will be clear to those skilled in the art, the various features can easily be produced in a combined blanking/folding die, in particular by means of a stepwise process in which the sheet section is provided with the shape that is ultimately desired, passing through the process steps as it were in the tangential direction.

Advantageously, one of the inner segments will consist of two parts. This creates the possibility for bending the spacer open and/or for reducing its circumference for fitting in the outer tube. A further advantage is that such a spacer can easily be formed from a strip of sheet material.

According to a further advantageous embodiment, the two parts from which said divided inner segment is formed can be coupled to one another by means of connecting means. Such connecting means can be constructed in a wide variety of ways. For example, consideration can be given to clamping clasps. A very simple embodiment provides a lip provided on the one part of the divided inner segment and a slot provided in the other part of the divided inner segment, into which slot said lip can be inserted to anchor it.

According to the invention it is furthermore advantageous if the at least one inner segment always has a tangential section to make contact with the inside of the outer tube. In this way stable positioning of the spacer with respect to the outer tube is possible. Correspondingly according to the invention it is advantageous if the at least one inner segment always has a tangential section to make contact with the outside of the inner tube.

For axial and also tangential fixing of the spacer with respect to the inner tube and/or outer tube, it is advantageous according to the invention if the at least one inner segment and/or at least one outer segment has a cut-out and if the inner tube or outer tube, respectively, has a protuberance that can be accommodated in said cut-out.

According to a further aspect, the present invention relates to an assembly of an inner tube and a spacer according to the invention, wherein the spacer is provided at one end of the inner tube with the converging surfaces of the radial segments facing said end. With this arrangement the spacer can, on the one hand, be fitted relatively easily onto the inner tube because fitting is done at the end and thus there is no need for movement over a substantial portion of the inner tube. On the other hand, the assembly of inner tube and spacer that has been formed can easily be inserted in the outer tube since the sloping guide surfaces on the radial segments are effective immediately on insertion into the outer tube.

According to a further aspect the invention relates to an assembly of an outer tube and a spacer according to the invention, wherein the spacer is provided in one end of the outer tube and wherein the converging surfaces of the radial segments are located outside the outer tube and in particular converge in the direction facing away from said outer tube. In this way the sloping surfaces of the radial segments of the spacer can also function as guide member/centring member for a further outer tube that has to be connected to the outer tube in which the spacer has been fitted.

According to yet a further aspect the present invention relates to an assembly of an inner tube, an outer tube and a spacer according to the invention, wherein the spacer is provided on one end of the inner tube with the converging surfaces of the radial segments facing towards the end and is also provided in one end of the outer tube, the converging surfaces of the radial segments being located outside the outer tube. In this way the same advantage as described above is achieved, that is to say that the spacer acts as a centring/guide member for centring a further outer tube to be connected to the assembly. An inner tube can already have been fitted in said outer tube, which inner tube will then also be centred with the outer tube at the same time.

The present invention will be explained in more detail below with reference to an illustrative embodiment shown in the drawing. In the drawing:
Figure 1 shows a perspective view of a spacer according to a first embodiment of the invention;
Figure 2 shows a view of the spacer according to Fig. 1 in the direction according to arrow II, but in the assembled state with inner tube and outer tube in section;
Figure 3 shows a side view of the spacer according to Figure 1 from the direction of arrow III;
Figure 4 shows a view of an opened out spacer according to Figure 1;
Figure 5 shows, as a detail, a longitudinal sectional view V (Fig. 2) of the spacer according to Fig. 1 in the fitted state;
Figure 6 shows a corresponding sectional view to Fig. 5, but with a different embodiment of the spacer according to the invention.

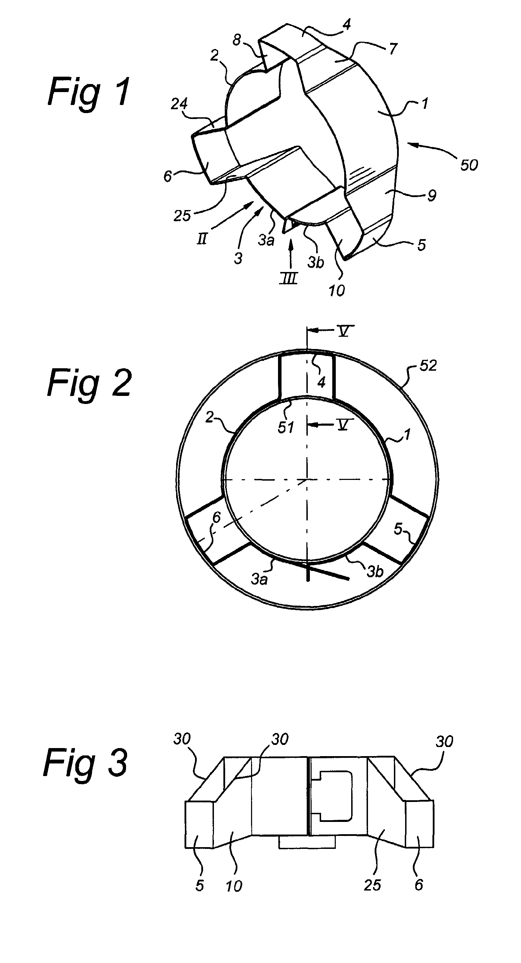

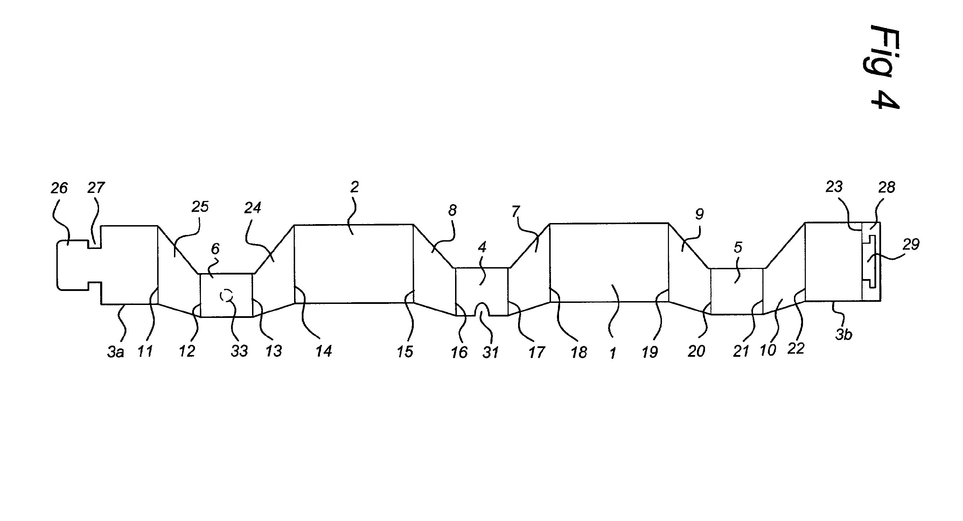

The spacer shown in Figures 1, 2, 3 and 4 is constructed from a strip of sheet material. When forming the spacer fold lines 11 to 23, each of which delimits adjacent segments of the enclosing part of the spacer, are formed in the strip of sheet material. The enclosing part comprises three inner segments 1, 2, 3. Of these, inner segment 3 is made up of two parts, i.e. 3a and 3b. The enclosing part further comprises three outer segments 4, 5 and 6. Outer segment 4 is joined to inner segment 1 via a radial segment 7. Outer segment 4 is furthermore joined to the inner segment 2 via a radial segment 8. In a corresponding manner radial segments 24 and 25 join the outer segment 6 to inner segment 2 and 3a, respectively, and radial segments 9 and 10 join the outer segment 5 to inner segment 1 and inner segment part 3b, respectively. A lip 26 with constriction 27 has been formed at the end of inner segment part 3a. A lip 22 that can be bent radially outwards about fold line 23 and has a T-shaped cut-out is provided at the end of inner segment part 3b. The broad part of the lip 26 can be inserted through the broad part of the T-shaped cut-out 29, after which the constricted part 27 of the lip fits in the narrower part of the T-shaped cut-out 29 to provide anchoring. This joining of the inner segment parts 3 a and 3b is illustrated in particular in Figures 2 and 3.

In accordance with the invention each radial segment 7, 8, 9, 10, 24, 25 is provided with a sloping surface 30.

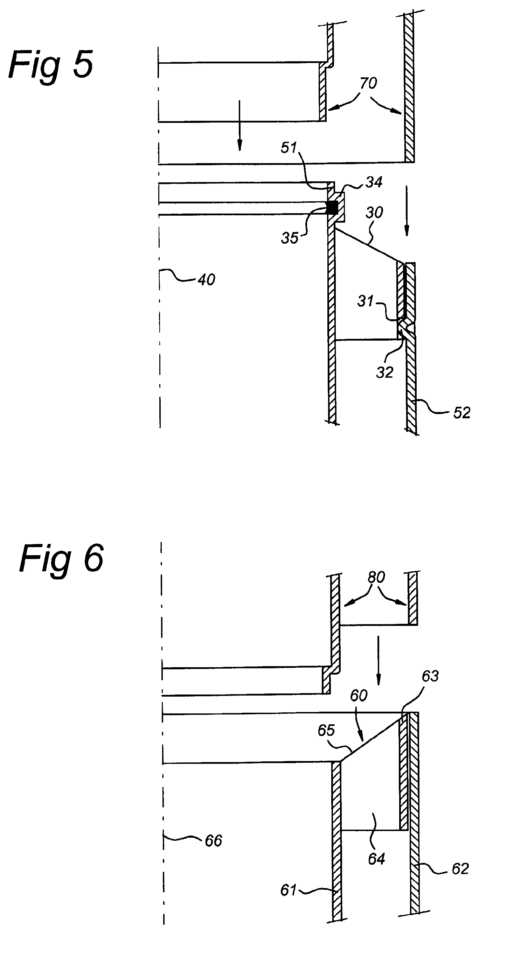

The spacer, indicated in its entirety by the reference numeral 50, can be fitted around an inner tube 51 and in an outer tube 52. In this case the radial segments 7, 8, 9, 10, 24 and 25 then ensure radial positioning of the inner tube with respect to the outer tube. In order to secure the outer tube 52 tangentially with respect to the spacer 50, the spacer 50 is provided with a cut-out 31 in an outer segment 4 and the outer tube 52 is provided with an indentation 32 that fits in said cut-out 31. This is illustrated in Fig. 5. In order to achieve simultaneous axial securing in a similar manner, the cut-out 31 could be made as a hole 33, as is indicated by broken lines in the outer segment 6. Tangential and/or axial securing of the spacer 50 on the inner tube 51 is also possible in a corresponding manner. Axial securing of the spacer with respect to the inner tube 51 and/or outer tube 52 can also be achieved by means of a protuberance on the external surface of the inner tube or, respectively, a protuberance on the internal surface of the outer tube, which protuberance forms an axial stop for the spacer 50. An example of this is given in Fig. 5, which shows an annular peripheral protuberance 34 on the inner tube. Said inner tube 51 is provided on the inside with a sealing ring 35 in this location. The sealing ring 35 makes an airtight seal on a pipe section to be inserted in the inner tube 51 possible.

Figure 6 shows a variant of a spacer 50, specifically spacer 60. The difference between spacer 50 and spacer 60 is that the direction of the sloping surfaces 30 of spacer 50 is now reversed. The sloping surfaces 30 are indicated in Fig. 6 as reversed sloping surfaces 65. The axial centre line 40 from Fig. 5 is indicated by 66 in Fig. 6. Furthermore, in Fig. 6 the inner tube is indicated by 61 and the outer tube by 62. The radial segment visible in the section in Fig. 6 is indicated by 64 and the outer segment visible in section in Fig. 6 is indicated by 63. An inner segment cannot be seen in Fig. 6 because this is located behind the radial segment 64.

When fitting an inner tube in an outer tube the embodiment according to Fig. 5 offers an advantage if the spacer is first fitted on the inner tube and the assembly of inner tube and spacer is then inserted in the outer tube. The sloping surfaces 30 will then automatically centre the outer tube with respect to the inner tube. The embodiment according to Fig. 6 offers an advantage if the spacer is first fitted in the outer tube and the assembly of spacer 60 and outer tube 62 is then pushed over an inner tube 61 (or in other words the inner tube 61 is inserted in said assembly). Entirely independently of the fitting sequence of inner tube with respect to outer tube, the sloping surfaces 30 and 65 of the spacers 50 and 60 offer a substantial advantage when coupling on a further inner tube/outer tube assembly 70, 80 (see Figs 5 and 6). Specifically, with reference to Fig. 5, the outer tube of the inner tube/outer tube assembly 70 will be guided along the sloping surfaces 30 to butt against outer tube 52, whilst, at the same time, an end section of the inner tube of the assembly 70 constricted for this purpose becomes inserted in the inner tube 50. Sealing of the outer tube of the assembly 70 on the outer tube 52 can then be achieved as is conventionally known by means of a sealing tape or a compression ring provided with seals. The spacer 60 correspondingly offers essentially the same advantage. Here the inner tube of the assembly 80 will be guided by the sloping edge 65 so that, in this way, the constricted insertion part fits in the inner tube 61, whilst, at the same time, the outer tube of the assembly 80 will butt against the outer tube 62. It should be clear that the outer tubes of the assemblies 70 and 80 could also be provided with a widened end section that engages around the end section of the outer tube 52 and 62, respectively.

## Claims

1. Spacer for positioning an inner tube in an outer tube, the spacer comprising an enclosing part for enclosing the inner tube all round, the enclosing part comprising,
• at least one inner segment for engaging on the outside of the inner tube;
• at least one outer segment for engaging on the inside of the outer tube, and
• at least two radial segments extending between the at least one inner segment and the at least one outer segment.
**characterised in that** the radial segments, viewed in the axial direction, comprise a surface that converges, in particular tapers, towards the axial centre line.

2. Spacer according to Claim 1, **characterised in that** the spacer comprises at least three such radial segments and **in that** these radial segments are distributed, in particular uniformly distributed, around the periphery of the enclosing part.

3. Spacer according to one of the preceding claims, **characterised in that** the spacer is made of a sheet section, in particular a single sheet section, comprising a multiplicity of said inner segments and a multiplicity of said outer segments, the inner and outer segments merging into a said radial segment at the tangential ends thereof via a fold line.

4. Spacer according to Claim 3, **characterised in that** one of the inner segments consists of two parts.

5. Spacer according to Claim 4, **characterised in that** said two parts can be coupled to one another by means of connecting means.

6. Spacer according to one of the preceding claims, **characterised in that** the at least one outer segment always has a tangential section to make contact with the inside of the outer tube.

7. Spacer according to one of the preceding claims, **characterised in that** the at least one inner segment always has a tangential section to make contact with the outside of the inner tube.

8. Spacer according to one of the preceding claims, **characterised in that** the at least one inner segment and/or at least one outer segment has a cut-out and **in that** the inner tube or outer tube, respectively, has a protuberance that can be accommodated in said cut-out.

9. Assembly of an inner tube and a spacer according to one of the preceding claims, wherein the spacer is provided at one end of the inner tube with the converging surfaces of the radial segments facing said end.

10. Assembly of an outer tube and a spacer according to one of Claims 1 - 7, wherein the spacer is provided in one end of the outer tube and wherein the converging surfaces of the radial segments are located outside the outer tube.

11. Assembly of an inner tube, an outer tube and a spacer according to one of Claims
1 - 7, wherein the spacer is provided on one end of the inner tube with the converging surfaces of the radial segments facing said end and is also provided in one end of the outer tube, and wherein the converging surfaces of the radial segments are located outside the outer tube.
